# FASCICULE DE BREVET EUROPEEN

(11) **EP 1 234 000 B1**
(45) Date de publication et mention de la délivrance du brevet: **30.07.2003**
(21) Numéro de dépôt: 00971472.6
(22) Date de dépôt: 20.10.2000
(51) Int. Cl.: C08J 5/18, C09K 15/08

(54) **FILMS DE POLYOLEFINES CONTENANT DES QUINONES GREFFEES ET STRUCTURES COMPRENANT CES FILMS**
GEPFROPFTE CHINONE ENTHALTENDE POLYOLEFINFOLIEN UND STRUKTUREN, DIE DIESE FOLIEN ENTHALTEN
POLYOLEFIN FILMS CONTAINING GRAFTED QUINONES AND STRUCTURES COMPRISING SAME

(30) Priorité: 20.10.1999 FR 9913079
(43) Date de publication de la demande: 28.08.2002
(73) Titulaire: Atofina, 92800 Puteaux (FR)
(72) Inventeur: ROBERT, Patrice, F-27170 Beaumont le Roger (FR)
(86) Numéro de dépôt international: FR0002935
(87) Numéro de publication internationale: WO01029116

(56) Documents cités:
- WO-A-94/12590
- WO-A-99/10251
- DATABASE WPI Section Ch, Week 199318 Derwent Publications Ltd., London, GB; Class A14, AN 1993-148718 XP002141525 & JP 05 084738 A (SEKISUI CHEM IND CO LTD) , 6 avril 1993 (1993-04-06)
- PATENT ABSTRACTS OF JAPAN vol. 1999, no. 05, 31 mai 1999 (1999-05-31) & JP 11 052560 A (JSR CORP), 26 février 1999 (1999-02-26)

## Description

La présente invention concerne un film absorbeur d'oxygène et plus particulièrement un film de polyoléfines comprenant des quinones greffées et concerne également un emballage comprenant un tel film.

De nombreux produits alimentaires se dégradent au contact de l'oxygène de l'air, c'est pourquoi on utilise des emballages en général constitués d'une structure multicouche pour les conserver pendant leur transport, leur distribution et ceci jusqu'à leur consommation.

Cette structure comprend un film d'un polymère, formant barrière à l'oxygène, tel que l'EVOH (copolymère de l'éthylène et de l'alcool vinylique ou copolymère de l'éthylène et de l'acétate de vinyle saponifié) ou des polyamides. Cependant un peu d'air entre toujours avant la fermeture de l'emballage. Il n'est pas toujours possible de faire le vide. De plus, des aliments de structure poreuse peuvent contenir de l'air qu'il est difficile d'enlever même en faisant le vide.

Il a été mis au point des structures comprenant un film barrière et un film absorbeur d'oxygène disposés de telle sorte que le film barrière est à l'extérieur et le film absorbeur d'oxygène à l'intérieur de l'emballage, l'intérieur de l'emballage définissant la surface de l'emballage en contact avec l'aliment qu'il contient et l'extérieur de l'emballage définissant la surface de l'emballage en contact direct avec l'air ambiant. En fait ces structures comprennent aussi d'autres films par exemple en polyéthylène ou en polypropylène qui assurent la tenue mécanique de la structure et leur protection contre l'eau.

Le film en polyoléfine de la présente invention comprenant des quinones greffées est un film absorbeur d'oxygène utile dans la technique décrite ci-dessus. L'invention concerne aussi une structure comprenant un ou des films absorbeurs d'oxygène et un ou des films barrières.

Les demandes de brevet WO 94 12590, WO 96 34070 et WO 99 10251 décrivent la technique exposée plus haut dans le domaine de l'invention et plus particulièrement le film absorbeur d'oxygène ainsi que son fonctionnement. Cette technique consiste à introduire dans un film polymère des molécules d'anthraquinone (AQ). Le principe de fonctionnement de ce système se décompose en 3 étapes :
- Etape d'Activation :
   Les molécules de quinone sont réduites en molécules d'hydroquinone sous irradiation UV, les protons nécessaires étant fournis par des donneurs de protons contenus dans le polymère. Cette activation est faite après la fabrication de l'emballage. Ainsi, il n'est pas nécessaire de fabriquer ce film sous atmosphère inerte.
- Etape d'Absorption :
   L'oxygène contenu à l'intérieur de l'emballage ainsi que les faibles quantités d'oxygène qui pourraient franchir le film barrière réagissent sur les hydroquinones obtenues à l'étape précédente. La réaction conduit à l'obtention de quinone et de peroxyde d'hydrogène H₂O₂.
- Etape de Destruction de H₂O₂ :
   Celle-ci est effectuée par un réducteur contenu dans le polymère. La quantité de ce réducteur peut être ajustée de manière à ne pas détruire tout le H₂O₂ de façon à en laisser une quantité suffisante pour obtenir un effet bactéricide.

Dans les exemples de ces arts antérieurs les constituants du film absorbeur d'oxygène sont les polymères suivants :
- des mélanges de polymère avec des molécules absorbantes d'oxygène, ce ne sont pas des polyoléfines greffées c'est à dire qu'il n'y a pas de lien chimique entre la molécule absorbante et le polymère.
- des copolymères du styrène, du 2-hydroxyéthyle méthacrylate et de la vinylanthraquinone.
- des EVOH greffés par une anthraquinone fonctionnalisée avec un chlorure d'acide.
- des copolymères éthylène-acide acrylique ayant réagi avec la bromoéthylanthraquinone pour donner des copolymères ethylène-acrylate d'anthraquinone.

Le mélange de molécules du type anthraquinone avec des polymères n'est pas facile à réaliser et la copolymérisation de ces molécules du type anthraquinone avec d'autres monomères est rendue difficile à cause du point de fusion élevé de ces molécules. Les greffages par des quinones portant des groupements chlorure d'acide ou des groupements bromés sont coûteux parce que ces fonctions sont compliquées à préparer et que le greffage génère des sous produits bromés ou chlorés difficiles à éliminer.

La demanderesse a maintenant trouvé qu'on pouvait greffer des quinones sur des polymères portant des groupements époxydes et qu'on pouvait les transformer très facilement en film, ce film pouvant être utilisé comme absorbeur d'oxygène dans les structures citées plus haut.

La présente invention concerne un film comprenant des copolymères de l'éthylène et d'un époxyde insaturé et comprenant des quinones greffées sur ces copolymères. L'avantage de ces films est qu'on peut les fabriquer facilement et que les quinones qu'on vient greffer sur les copolymères sont faciles à fabriquer. Un autre avantage est que ces films peuvent être activés par simple passage sous U.V. sans qu'il soit nécessaire d'ajouter un donneur de protons dans le film.

La présente invention concerne aussi une structure comprenant au moins un film barrière à l'oxygène et au moins le film absorbeur d'oxygène précédent.

La présente invention concerne aussi un emballage comprenant la structure précédente dans lequel, en partant de l'intérieur de l'emballage et en allant vers l'extérieur, on trouve d'abord le film absorbeur d'oxygène puis le film barrière à l'oxygène.

Les copolymères de l'éthylène et d'un époxyde insaturé peuvent être des polyéthylènes greffés par un époxyde insaturé ou des copolymères de l'éthylène et d'un époxyde insaturé qu'on obtient par exemple par polymérisation radicalaire.
A titre d'exemple d'époxydes insaturés à greffer ou à polymériser, on peut citer :
- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbomène-2-méthyl-2-glycidyl carboxylate et l'endo cis-bicyclo(2,2,1)-5-heptène-2,3-diglycidyl dicarboxylate.
S'agissant des polyéthylènes sur lesquels on vient greffer l'époxyde insaturé, on entend par polyéthylène des homo- ou copolymères.

A titre de comonomères, on peut citer :
- les alpha-oléfines, avantageusement celles ayant de 3 à 30 atomes de carbone, à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1―eicocène, le 1-dococène, le 1-tétracocène, le 1-hexacocène, le 1―octacocène, et le 1-triacontène; ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
Le polyéthylène peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0,86 et 0,98 g/cm³. Le MFI (indice de viscosité à 190°C, 2,16 kg) est compris avantageusement entre 0,1 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate d'alkyle et de préférence 2 à 40% en poids.

Le greffage est une opération connue en soi.

S'agissant des copolymères de l'éthylène et de l'époxyde insaturé non greffé sur le polyéthylène, il s'agit des copolymères de l'éthylène, de l'époxyde insaturé et éventuellement d'un autre monomère pouvant être choisi parmi les comonomères qu'on a cité plus haut pour les copolymères de l'éthylène destinés à être greffés.

Les copolymères de l'éthylène et d'un époxyde insaturé sont avantageusement des copolymères éthylène/(méth)acrylate d'alkyle/époxyde insaturé obtenus par copolymérisation des monomères et non pas par greffage de l'époxyde insaturé sur le polyéthylène. Ils contiennent de 0 à 40% en poids de (méth)acrylate d'alkyle, de préférence 5 à 35% et jusqu'à 10% en poids d'époxyde insaturé, de préférence 0,1 à 8%.

L'époxyde insaturé est avantageusement le (méth)acrylate de glycidyle. Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 20 à 35%. Le MFI est avantageusement compris entre 5 et 100 (en g/10 min à 190°C sous 2,16 kg), la température de fusion est comprise entre 60 et 110°C.

S'agissant des quinones qu'on va greffer sur les copolymères précédents, on peut citer à titre d'exemple la benzoquinone, l'anthraquinone, et la naphtoquinone. La quinone porte une fonction capable de réagir avec le groupe époxyde du copolymère. A titre d'exemple on peut citer les acides carboxyliques, les sels d'acides carboxyliques, les anhydrides d'acides dicarboxyliques, les alcools et les amines. On préfère les acides carboxyliques. Les quinones fonctionnalisées sont des solides à température ambiante. On les met en poudre, puis on les ajoute dans les copolymères précédents à l'état fondu en effectuant un mélange intime. Le dispositif dans lequel on fait ce mélange intime peut être tout appareil utilisé pour le mélange des thermoplastiques tel qu'une extrudeuse mono ou double vis, un malaxeur ou un KO malaxeur BUSS®. Les quinones fonctionnalisées sont ajoutées dans ces dispositifs mélangeurs à l'aide de trémies ou tout dispositif d'introduction de poudres. La granulométrie de ces poudres peut être très variable. Plus elle est fine plus l'incorporation de la poudre dans le polymère fondu est homogène. Avantageusement, elle est d'au plus 200 µm et de préférence comprise entre 10 et 150 µm.

Le copolymère à l'état fondu contenant les quinones greffées peut être envoyé dans un dispositif pour le mettre en film ou refroidi et récupéré sous forme de granulés pour être mis en film ultérieurement comme la plupart des thermoplastiques. L'épaisseur du film peut être comprise entre 10 et 300 µm et de préférence entre 15 et 150 µm.

La proportion de quinone fonctionnalisée à utiliser est d'une quinone par fonction époxyde. S'agissant de l'anthraquinone carboxylée (AQ), son greffage sur le copolymère de l'éthylène et d'un époxyde insaturé (methacrylate de glycidyle) peut être représentée par l'équation suivante : 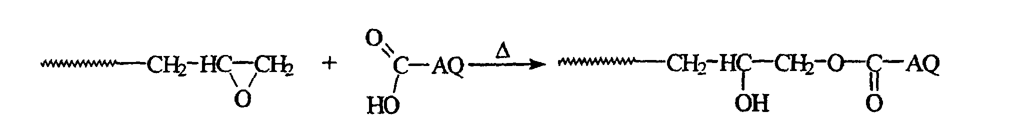 dans laquelle "AQ" désigne l'anthraquinone.

On peut procéder ensuite à l'activation des fonctions quinones mais il est recommandé de ne le faire que lorsque l'emballage est fermé ou prêt à être fermé. Cette activation peut se faire par exposition aux U.V. ou toute longueur d'onde appropriée aux quinones utilisées, par la chaleur, les rayons gamma, une décharge corona ou encore un faisceau d'électrons. Le film peut aussi contenir un destructeur de l' H₂O₂ formée tel que par exemple une triphénylphosphine, un triphénylphosphite, du triéthylphosphite, du triisopropylphosphite, du tris(nonylphényl)phosphite, du tris(mono et bis-nonylphényl)phosphite, du butylhydroxytoluène, du butylhydroxyanisole, du tris(2,4-di-ter-butylphényl)phosphite, du dilaurylthiodipropionate, du 2,2'-méthylène-bis-(6-t-butyl-p-crésol), du tetrakis(2,4-d-ter-butylphényl)4,4'-biphénylènediphosphonite, de la poly(4-vinylpyridine) ou leurs mélanges.

S'agissant de la structure multicouche comprenant au moins un film barrière à l'oxygène et au moins le film absorbeur d'oxygène précédent, le film barrière est avantageusement en EVOH, en polyamide, en polycétone ou en PVDF. Avantageusement, cette structure comprend aussi un ou plusieurs films de polyoléfine pour renforcer la structure et pour la protection contre l'eau. Si le film barrière est en EVOH, la structure comprend avantageusement un film en polyoléfine tel que polyéthylène ou polypropylène de chaque coté du film barrière. En effet l'EVOH est sensible à l'humidité et perd sa propriété barrière d'oxygène en présence d'humidité. Avantageusement, la structure de l'invention comprend donc successivement : un film de polyoléfine, un film d'EVOH, un film de polyoléfine et le film contenant les quinones greffées comme absorbeur d'oxygène d'épaisseurs avantageusement (dans le même ordre en µm) : 10 à 100 / 5 à 20 / 10 à 100 / 15 à 150.

Selon une autre forme de l'invention, la structure comprend de plus un film polyoléfine, le film absorbeur d'oxygène étant ainsi pris en sandwich entre deux films de polyoléfines. Les polyoléfines étant très perméables à l'oxygène, ce film de polyoléfine ne gêne donc pas la réaction de l'oxygène avec les quinones réduites.

On ne sortirait pas du cadre de l'invention en disposant entre les couches précédentes un liant tel qu'un liant de coextrusion.

Ces structures peuvent être fabriquées par les techniques habituelles des films multicouches telles que la coextrusion en cast ou en bulle ou encore par extrusion couchage.

La présente invention concerne aussi un emballage comprenant la structure précédente. Il peut être formé par la structure qu'on ferme par tout moyen sur elle même pour en faire des sachets ou des sacs. Les structures de l'invention peuvent n'être qu'une partie de l'emballage, par exemple c'est le film qui ferme une barquette. Avantageusement, cette barquette est en un matériau barrière mais ne contient pas de film absorbeur d'oxygène, l'absorbeur d'oxygène compris dans le film de fermeture de la barquette étant suffisant. Une fois l'emballage fermé les quinones sont activées par réduction à l'aide d'un passage sous une lampe U.V. ou tout moyen équivalent.

### Exemple 1- Greffage de la 2-carboxyanthraquinone sur le Lotader AX 8840 ® en extrudeuse double vis.

Le LOTADER AX 8840 est un copolymère statistique éthylène - méthacrylate de glycidyle (GMA), contenant 8% en poids de GMA et ayant un MFI égal à 4 (à190°C sous 2.16kg).
La 2-carboxyanthraquinone, de formule développée : 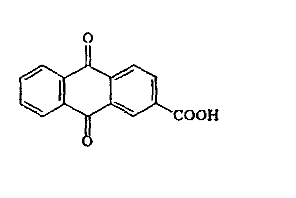 Ce composé se présente sous la forme d'une poudre jaune, et a un point de fusion de 288°C.
Le greffage est effectué à l'état fondu dans une extrudeuse double vis corotative de laboratoire LEISTRITZ®.
Le profil thermique de l'extrudeuse est fixé à 200°C. Le LOTADER® est introduit dans la trémie d'alimentation en première zone de l'extrudeuse à l'aide d'un doseur pondéral. La 2-carboxyanthraquinone est introduite sous forme de poudre à l'aide d'un autre doseur. Les proportions utilisées sont : 88% de LOTADER AX 8840® / 12% de 2-carboxyanthraquinone. L'extrusion réactive du mélange des 2 composants est effectuée à un débit de 6kg / h, à une vitesse de rotation des vis égale à 50 tours/mn . Le produit greffé est extrudé sous forme d'un jonc qui est refroidi dans un bac à eau, puis granulé après passage dans un granulateur.
Le produit obtenu a un melt index (MFI) mesuré à 190°C sous 2.16 kg égal à 2.
L'analyse par spectroscopie infra-rouge montre la disparition des fonctions époxy et l'apparition des fonctions OH .
Le produit a ensuite été extrudé sous forme de film de 100 µm à l'aide d'une extrudeuse de film cast de marque SCAMIA®. Le film est parfaitement transparent et présente une légère couleur « cuivrée ».

### Exemple 2- Greffage de la 2-carboxyanthraquinone sur le LOTADER AX 8900®

Le LOTADER AX 8900® est un terpolymère statistique éthylène - acrylate de méthyle - méthacrylate de glycidyle (GMA), contenant 8% en poids de GMA, 28% en poids d'acrylate de méthyle et ayant un MFI égal à 6 (à190°C sous 2.16kg).
Le greffage est effectué à l'état fondu dans un malaxeur, mélangeur interne de laboratoire BRABENDER®.
La température du corps du malaxeur a été fixée à 220°C .
Le LOTADER AX 8900® et la 2-carboxyanthraquinone sont introduits dans la chambre du malaxeur et les réactifs sont malaxés pendant 4mn. Les proportions utilisées sont : 96% de LOTADER AX 8900 / 4% de 2-carboxyanthraquinone. La vitesse de rotation des pales est fixée à 50tr/mn.
Le produit est ensuite mis en forme sous presse pour donner un film de 200 µm.

### Exemple 3- Activation du produit de l'exemple 2 par photo réduction sous UV.

Un échantillon de 0.6 g du film préparé dans l'exemple 2 a été activé par passage sous un banc U.V. de laboratoire de type MINICURE équipé d'une lampe à mercure.
Le temps d'irradiation du film a été de 12 s.

### Exemple 4- Mesure des propriétés d'absorption d'oxygène.

Le film activé de l'exemple 3 a ensuite été placé dans une cellule contenant de l'oxygène. On a suivi la diminution de la quantité d'oxygène gazeux au cours du temps par chromatographie gazeuse :
Volume d'oxygène absorbé après 5 h : 4 ml

## Revendications

1. Film absorbeur d'oxygène comprenant des copolymères de l'éthylène et d'un époxyde insaturé, lesdits copolymères étant greffés par des quinones.

2. Film selon la revendication 1, dans lequel les copolymères de l'éthylène et d'un époxyde insaturé sont avantageusement des copolymères éthylène/(méth)acrylate d'alkyle/époxyde insaturé obtenus par copolymérisation desdits monomères et contenant de 0 à 40% en poids de (méth)acrylate d'alkyle et jusqu'à 10% en poids d'époxyde insaturé.

3. Film selon la revendication 1 ou 2, dans lequel les quinones greffées sont choisies dans le groupe comprenant la benzoquinone, l'anthraquinone et la naphtoquinone, lesdites quinones comprenant une fonction capable de réagir avec le groupe époxyde de l'époxyde insaturé.

4. Film selon la revendication 3, dans lequel les quinones portent une fonction acide carboxylique.

5. Structure comprenant au moins un film barrière à l'oxygène et au moins un film absorbeur d'oxygène selon l'une quelconque des revendications précédentes.

6. Structure selon la revendication 5, dans laquelle le film barrière à l'oxygène est en EVOH, en polyamide, en polycétone ou en PVDF.

7. Structure selon la revendication 6, comprenant successivement : un film de polyoléfine, un film d'EVOH, un film de polyoléfine et un film absorbeur d'oxygène selon l'une quelconque des revendications 1 à 4.

8. Emballage comprenant une structure selon l'une quelconque des revendications 5 à 7 dans lequel, en partant de l'intérieur de l'emballage et en allant vers l'extérieur, on trouve d'abord le film absorbeur d'oxygène selon l'une quelconque des revendications 1 à 4 puis le film barrière à l'oxygène.

## Patentansprüche

1. Sauerstoffabsorbierende Folie, enthaltend Copolymere von Ethylen und einem ungesättigten Epoxid, die mit Chinonen gepfropft sind.

2. Folie nach Anspruch 1, bei der es sich bei den Copolymeren von Ethylen und einem ungesättigten Epoxid vorteilhafterweise um Copolymere von Ethylen, Alkyl(meth)acrylat und ungesättigtem Epoxid handelt, die durch Copolymerisation der Monomere erhältlich sind und 0 bis 40 Gew.-% Alkyl(meth)acrylat und bis zu 10 Gew.-% ungesättigtes Epoxid enthalten.

3. Folie nach Anspruch 1 oder 2, bei der die gepfropften Chinone aus der Gruppe bestehend aus Benzochinon, Anthrachinon und Naphthochinon ausgewählt sind und eine zur Reaktion mit der Epoxidgruppe des ungesättigten Epoxids befähigte Funktion enthalten.

4. Folie nach Anspruch 3, bei der die Chinone eine Carbonsäurefunktion tragen.

5. Konstruktion mit einer Sauerstoffbarrierefolie und mindestens einer sauerstoffabsorbierenden Folie nach einem der vorhergehenden Ansprüche.

6. Konstruktion nach Anspruch 5, bei der die Sauerstoffbarrierefolie aus EVOH, Polyamid, Polyketon oder PVDF besteht.

7. Konstruktion nach Anspruch 6, enthaltend nacheinander: eine Polyolefinfolie, eine EVOH-Folie, eine Polyolefinfolie und eine sauerstoffabsorbierende Folie nach einem der Ansprüche 1 bis 4.

8. Verpackung, enthaltend eine Konstruktion nach einem der Ansprüche 5 bis 7, bei der von der Innenseite der Verpackung zur Außenseite zunächst die sauerstoffabsorbierende Folie nach einem der Ansprüche 1 bis 4 und dann die Sauerstoffbarrierefolie anzutreffen ist.

## Claims

1. Oxygen-absorbing film comprising copolymers of ethylene and of an unsaturated epoxide, the said copolymers being grafted by quinones.

2. Film according to Claim 1, in which the copolymers of ethylene and of an unsaturated epoxide are advantageously ethylene/alkyl (meth)acrylate/unsaturated epoxide copolymers obtained by copolymerization of the said monomers comprising from 0 to 40% by weight of alkyl (meth)acrylate and up to 10% by weight of unsaturated epoxide.

3. Film according to Claim 1 or 2, in which the grafted quinones are chosen from the group consisting of benzoquinone, anthraquinone and naphthoquinone, the said quinones comprising a functional group capable of reacting with the epoxide group of the unsaturated epoxide.

4. Film according to Claim 3, in which the quinones carry a carboxylic acid functional group.

5. Structure comprising at least one barrier film to oxygen and at least one oxygen-absorbing film according to any one of the preceding claims.

6. Structure according to Claim 5, in which the barrier film to oxygen is made of EVOH, of polyamide, of polyketone or of PVDF.

7. Structure according to Claim 6, successively comprising: a polyolefin film, an EVOH film, a polyolefin film and the oxygen-absorbing film according to any one of Claims 1 to 4.

8. Packaging comprising the structure according to any one of Claims 5 to 7, in which, starting from the inside of the packaging and proceeding towards the outside, first the oxygen-absorbing film according to any one of Claims 1 to 4 is encountered, followed by the barrier film to oxygen.
